(19) Europäisches Patentamt / European Patent Office / Office européen des brevets

(11) **EP 2 239 597 A1**

(12) **DEMANDE DE BREVET EUROPEEN**

(43) Date de publication:
**13.10.2010 Bulletin 2010/41**

(51) Int Cl.:
***G01S 13/87*** *(2006.01)*     ***G01S 13/90*** *(2006.01)*

(21) Numéro de dépôt: **10159225.1**

(22) Date de dépôt: **07.04.2010**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA ME RS**

(30) Priorité: **07.04.2009 FR 0901699**

(71) Demandeur: **Thales**
**92200 Neuilly Sur Seine (FR)**

(72) Inventeurs:
• **Discamps, Pierre Patrick**
 **33700 Merignac (FR)**
• **Normant, Eric**
 **33200 Bordeaux (FR)**

(74) Mandataire: **Lucas, Laurent Jacques et al**
**Marks & Clerk France**
**Conseils en Propriété Industrielle**
**Immeuble " Visium "**
**22, avenue Aristide Briand**
**94117 Arcueil Cedex (FR)**

(54) **RADAR AEROPORTE DE SURVEILLANCE AU SOL MULTI-MODE**

(57) Dispositif radar aéroporté de surveillance au sol, **caractérisé en ce qu'**il reproduit une cartographie de type STRIPMAP d'une zone d'intérêt divisée en bandes (101), les images de ces bandes étant prises successivement, chacune selon une technique de type SAR à balayage, les opérations de traitement de l'image d'une bande (101) étant produites successivement à la prise de l'image de cette bande (101) et de manière concomitante avec la réalisation d'au moins un mode radar additionnel, avant la prise de l'image de la bande (101) suivante.

FIG.3

**Description**

La présente invention concerne un radar aéroporté de surveillance au sol multi-mode. Elle s'applique notamment au domaine des radars à antenne synthétique embarqués sur des plateformes aéroportées, ou radars SAR selon l'acronyme anglo-saxon pour l'expression Synthetic Aperture Radar, et plus particulièrement aux dispositifs de ce type destinés à produire une image de grande fauchée du sol, selon la technique dite STRIPMAP, depuis une distance de sécurité du terrain survolé.

Une application connue de radars à antenne synthétique ou SAR est la prise d'images par bandelettes successives, désignée sous le nom de STRIPMAP. Selon cette technique, une plateforme aéroportée, encore dénommée porteur, typiquement un aéronef, est équipée d'une antenne radar, permettant de constituer une image sous la forme d'une bande, au fur et à mesure de l'avancement du porteur, en juxtaposant une série de bandelettes. L'image de toute une zone d'intérêt peut ensuite être constituée par juxtaposition de toutes les bandes. L'antenne radar a généralement une visée latérale sur le porteur, et la prise de bandelettes d'images est communément réalisée à un angle 90° de l'axe du vecteur vitesse du porteur.

L'image reconstituée par juxtaposition de bandelettes est ainsi une bande dont la largeur égale la largeur d'une bandelette. Cette largeur est habituellement désignée par le terme de fauchée. La longueur de la bande est uniquement limitée par la durée de sélection du mode radar durant l'avancement du porteur. Ainsi, la durée d'obtention en sortie du système, d'une bande de longueur X avec un porteur dont le module de la vitesse est V, est égale au temps mis par le porteur pour parcourir la distance X, soit X/V. Par exemple 200 secondes sont nécessaires pour un porteur évoluant à une vitesse de 100 m/s, pour réaliser une image sur une bande d'une longueur de 20 km.

Durant ces 200 secondes, le radar est mobilisé à temps plein. Ainsi il ne lui est possible de fonctionner que dans le mode STRIPMAP. Par exemple il lui est possible de fournir des informations sur les échos fixes situés dans la zone couverte par la bande, mais non sur les échos mobiles de cibles évoluant dans cette même zone.

Il existe des radars connus de l'état de la technique, permettant de fournir des informations multiples, sur les cibles statiques et les cibles mobiles. Ces dispositifs se basent sur des modes SAR et GMTI combinés, l'acronyme anglo-saxon GMTI désignant l'expression Ground Moving Target Indication, soit Indication de Cible Terrestre Mobile, et étant utilisée de manière courante dans le domaine technique des radars. Cependant, les radars actuellement capables de procurer de telles fonctionnalités, sont les radars les plus performants et les plus chers. Ceux-ci peuvent notamment disposer de technologies à antenne active à balayage électronique deux plans, couplées à des puissances de calcul extrêmement élevées, pour proposer des modes radar entrelacés qui dans une même séquence temporelle, extraient les cibles mobiles et fixes situées dans une zone donnée. Ces dispositifs très sophistiqués requièrent plusieurs systèmes de génération de forme d'onde et plusieurs récepteurs, et une puissance de calcul très importante. En outre, la plateforme porteuse doit être compatible des contraintes liées à ce type de systèmes, et doit donc notamment être capable d'embarquer un volume important ; l'impact sur la consommation en carburant de la plateforme porteuse est également important.

En d'autres termes, les dispositifs existants permettant un fonctionnement radar en multi-mode, notamment capables d'assurer le suivi de cibles fixes et mobiles, sont réservés à de gros systèmes, peu flexibles et relativement onéreux.

Un but de la présente invention est de pallier au moins les inconvénients précités, en proposant un dispositif de radar aéroporté de surveillance au sol multi-mode, notamment capable de générer une imagerie de type STRIPMAP d'une zone d'intérêt, simultanément, vu de l'opérateur, à une surveillance sur la même zone, des mobiles terrestres.

Un avantage de l'invention est lié au fait qu'elle peut être mise en oeuvre moyennant un équipement radar de faible encombrement, et une puissance de calcul relativement faible.

Un autre avantage de l'invention est lié au fait que le dispositif selon l'invention peut permettre l'exécution simultanée d'une imagerie de type STRIPMAP en combinaison avec d'autres modes radar, et/ou encore l'exécution en un temps donné d'une imagerie de type STRIPMAP sur une zone géographique plus large.

A cet effet, l'invention a pour objet un radar aéroporté de surveillance au sol multi-mode, **caractérisé en ce qu**'il reproduit une cartographie de type STRIPMAP d'une zone d'intérêt divisée en bandes, les images de ces bandes étant prises successivement, chacune selon une technique de type SAR à balayage, les opérations de traitement de l'image d'une bande étant produites consécutivement à la prise de l'image de cette bande et de manière concomitante avec la réalisation d'au moins un mode radar additionnel, avant la prise de l'image de la bande suivante.

Dans un mode de réalisation de l'invention, le radar aéroporté de surveillance au sol peut être **caractérisé en ce qu**'un mode additionnel est un mode de surveillance de mobiles terrestres de type GMTI à surveillance de grande zone, ou WAS GMTI selon l'acronyme pour l'expression anglo-saxonne de Wide Area Surveillance GMTI, couramment utilisé dans le domaine des radars.

Dans un mode de réalisation de l'invention, le radar aéroporté de surveillance au sol peut être **caractérisé en ce qu**'un mode additionnel est un mode d'imagerie de très haute résolution ou d'ultra-haute résolution connus sous la dénomination de SPOT HR ou SPOT UHR.

Dans un mode de réalisation de l'invention, le radar aéroporté de surveillance au sol peut être **caractérisé en ce qu'**un mode additionnel est un mode d'imagerie de type STRIPMAP.

Dans un mode de réalisation de l'invention, le radar aéroporté de surveillance au sol peut être **caractérisé en ce qu'**un mode additionnel est un mode de pistage de type balayage rapide de secteur, ou "FSS" GMTI, FSS étant l'acronyme anglo-saxon de l'expression "Fast Sector Scan". Dans un mode de réalisation de l'invention, le radar aéroporté de surveillance au sol peut être **caractérisé en ce qu'**un mode additionnel est un mode radar de type Détection et/ou poursuite de cibles aériennes.

Dans un mode de réalisation de l'invention, le radar aéroporté de surveillance au sol peut être **caractérisé en ce qu'**un mode additionnel est un mode radar de type Détection et/ou poursuite de cibles marines.

D'autres caractéristiques et avantages de l'invention apparaîtront à la lecture de la description, donnée à titre d'exemple, faite en regard des dessins annexés qui représentent :

- la figure 1, la vue schématique d'un exemple de plateforme aéroportée effectuant une imagerie de type STRIPMAP sur une bande d'une zone d'intérêt ;

- la figure 2, la vue schématique d'une plateforme aéroportée effectuant une imagerie de type STRIPMAP sur une bande étendue de la zone d'intérêt, selon un exemple de mode de réalisation de la présente invention ;

- la figure 3, la vue schématique d'une plateforme aéroportée effectuant une imagerie de type STRIPMAP sur une bande étendue de la zone d'intérêt, combinée avec un mode radar GMTI sur la même zone, selon un exemple de mode de réalisation de l'invention ;

- la figure 4, la vue schématique d'une plateforme aéroportée effectuant une imagerie de type STRIPMAP sur une bande de la zone d'intérêt, combinée avec la génération d'images de haute ou très haute définition au sein de la bande, selon un exemple de mode de réalisation de l'invention ;

- la figure 5, la vue schématique d'une plateforme aéroportée effectuant une imagerie de type STRIPMAP sur une bande de la zone d'intérêt, combinée avec une pluralité de modes radar, selon un exemple de mode de réalisation de l'invention.

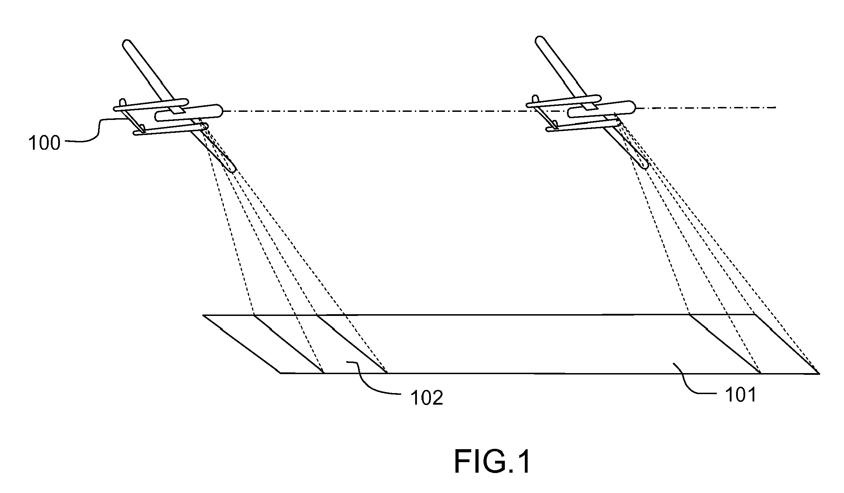

La figure 1 présente la vue schématique d'un exemple de plateforme aéroportée, par exemple un aéronef, effectuant une imagerie de type STRIPMAP sur une bande d'une zone d'intérêt donnée.

Une plateforme aéroportée 100 est équipée d'un dispositif de radar lui permettant de réaliser une prise d'images de type STRIPMAP, d'une bande 101 d'une zone d'intérêt. La plateforme aéroportée 100 suit par exemple une trajectoire rectiligne à une vitesse constante, et réalise une prise d'images par bandelettes 102 qui sont juxtaposées pour l'affichage à l'opérateur.

La juxtaposition d'une pluralité de bandelettes 102 selon des techniques en elles-mêmes connues, permet la reconstitution de l'image de la bande 101.

La présente invention propose d'utiliser une technique adaptée du mode de prise d'images SAR, dénommée VSAR selon l'acronyme de l'expression anglo-saxonne Versatile SAR. La technique de VSAR permet de générer une image tout en balayant la zone à surveiller par l'antenne du radar pendant le déplacement de la plateforme aéroportée. Ainsi, l'antenne radar ne reste plus pointée dans une direction fixe, mais produit le balayage d'une zone, en synchronisation avec l'avancement de la plateforme aéroportée. Ce balayage peut être réalisé de manière physique avec une antenne motorisée, ou bien de manière électronique, avec une antenne à balayage électronique. La technique VSAR est en elle-même connue de l'état de la technique, et habituellement employée pour produire des modes de cartographie de haute résolution en balayage de type communément désigné selon l'expression anglo-saxonne Doppler Beam Sharpening ou DBS. Les résolutions offertes par ces modes de cartographie sont de l'ordre du décamètre, typiquement de la classe 20 mètres à 50 mètres. Historiquement, ces modes ont été implantés dans les radars aéroportés à partir des années 1980 afin de fournir une cartographie de large secteur, offrant des résultats bien meilleurs que les techniques de cartographie de sol connues jusqu'alors. Ces modes ont ensuite été supplantés, dans les années 1990, par des modes radar à plus haute résolution avec antenne pointée, connus selon l'appellation de SPOTSAR, ou SAR pointé.

En revanche, selon la présente invention, la technique VSAR est utilisée pour produire une cartographie d'une zone d'intérêt avec un résultat équivalent à celui obtenu via une technique STRIPMAP traditionnelle tout en réalisant la prise de vue en un temps inférieur au temps d'avancement de l'avion; ainsi, du temps peut être alloué au système Radar pour fonctionner dans d'autres modes, et produire des informations supplémentaires. Des exemples de modes de réalisation possibles de l'invention sont donnés ci-après en référence aux figures suivantes.

En premier lieu, dans le but d'une meilleure compréhension de l'invention, quelques considérations théoriques sont développées ci-après.

Pour un radar opérant en mode SAR en balayage (VSAR), la vitesse de balayage optimale est calculée de manière à ce que le faisceau couvre la zone dont une image doit être produite, nécessairement plus grande que la taille du faisceau élémentaire, tout en passant suffisamment de temps pour satisfaire le critère d'ouverture synthétique d'antenne permettant la résolution recherchée.

Une formule approchée du calcul du temps d'observation résultant est donnée ci dessous :

$$T_{obs} \approx \frac{\theta_{az}d \, \sin \, i + \Delta X}{V \, \sin \, \theta_{visée}} \times \frac{\theta_{sa}}{\theta_{az}} \qquad (1),$$

où :

i est l'angle d'incidence du faisceau au sol,
$\theta_{az}$ est l'ouverture antenne en Azimut en radians,
d est la distance de prise de vue en mètres,
$\Delta X$ est la taille de la zone imagée en mètres,
V sin $\theta_{visée}$ est la vitesse porteur projetée sur la direction de visée ($\theta_{visée}$),
$\theta_{sa}$ est l'ouverture d'antenne synthétique.

L'ouverture d'antenne synthétique est liée à la résolution en azimut $\rho_{az}$ par la formule suivante :

$$\rho_{az} = \frac{\lambda}{2\theta_{sa}\sin i} \qquad (2)$$

En combinant les relations (1) et (2), le temps d'observation peut être exprimé selon la relation suivante :

$$T_{obs} \approx \frac{\lambda \Delta X}{2\theta_{az}\rho_{az} \, \sin \, iV \, \sin \, \theta_{visée}} + \frac{\lambda d}{2\rho_{az}V \, \sin \, \theta_{visée}} \qquad (3)$$

Le second terme de la relation (3) représente le temps d'observation du mode SPOT pointé ajouté au terme correspondant au fait que le faisceau ne couvre pas intégralement la fauchée à visualiser (terme en $\Delta X$). On note qu'un fonctionnement en mode SPOT pointé revient à une valeur nulle de $\Delta X$.

Pour une application de type STRIPMAP, $\theta_{visée}$ est proche de 90° et à grande distance, l'angle d'incidence i est également proche de 90°. On peut alors simplifier la relation (3) pour obtenir la relation suivante :

$$T_{obs} \approx \frac{\lambda \Delta X}{2\theta_{az}\rho_{az}V} + \frac{\lambda d}{2\rho_{az}V} \qquad (4)$$

Or $\Delta X / V$ représente le temps mis par le porteur pour avancer parallèlement à la zone d'intérêt, soit $T_{avanc}$.

On peut alors écrire:

$$T_{obs} \approx \frac{\lambda T_{avanc}}{2\rho_{az}}\left(\frac{1}{\theta_{az}} + \frac{d}{\Delta X}\right) \quad (5)$$

La relation (5) est indépendante de la vitesse de la plateforme aéroportée.

Ainsi, pour un radar donné, c'est-à-dire avec une ouverture en azimut donnée, effectuant une prise d'images à une distance d donnée grande, le rapport $T_{obs}/T_{avanc}$ est d'autant plus petit, donc favorable à la réalisation de modes radars additionnels :

que la résolution $\rho_{az}$ est grande,
que la fauchée réalisée $\Delta X$ est grande par rapport à la distance d.

Par exemple, pour une résolution en azimut $\rho_{az}$ égale à 3 mètres, une distance de prise de vue égale à 120 kilomètres, une longueur de bande image $\Delta X$ égale à 20 kilomètres, une ouverture en azimut de l'antenne égale à 30 milliradians, le rapport temps d'observation temps d'avancement tel que calculé via la relation (5) est égal à :

$$T_{obs}/T_{avanc} = 19,6\%$$

Ainsi, si une technique de type SAR en balayage est employée dans le but de produire une fonction de type STRIPMAP, le temps d'observation seul - c'est-à-dire sans prise en compte du temps de traitement associé, sur lequel plus de détails sont donnés ci-après - représente seulement environ 20% du temps mis par la plateforme aéroportée 100 pour couvrir une distance de 20 km, alors qu'en employant une technique usuelle de STRIPMAP, le temps d'observation est nécessairement égal au temps d'avancement de la plateforme aéroportée.

En ce qui concerne le temps de traitement, quelle que soit la technique employée, le dispositif de radar réalise l'extraction d'une carte de la zone après l'acquisition des données pendant le temps d'observation.

Le temps de traitement est une fonction combinée de plusieurs paramètres.

Au premier ordre, le temps de traitement est proportionnel à la fauchée $\Delta X$, à la profondeur de l'image - ou largeur de la bande image - $\Delta Y$, à la distance de prise de vue d, et inversement proportionnel au carré de la résolution en azimut $\rho_{az}$.

Ce temps n'est bien sûr pas déterminé par une relation mathématique pure, mais dépend de l'algorithme employé, de la puissance de calcul disponible et de l'architecture du traitement du signal. En résumé, ce temps est dépendant de la qualité de conception du traitement radar.

En se fondant sur l'état de l'art des radars SAR de dernière génération, basé sur des cartes de calcul telles que disponibles dans le commerce, et dans les conditions de calcul de l'application numérique de la relation (5), il est possible d'affirmer que le temps de calcul de l'image pour $\Delta X = \Delta Y$, est inférieur à 15 secondes.

Ainsi, le temps total pour la production d'une image de la zone d'intérêt survolée pendant le temps d'observation est approximativement égal à $T_{obs}$ + 15 secondes.

Ainsi, pour des temps d'avancement de la plateforme aéroportée de l'ordre de 200 secondes, il apparaît que dans le cadre de l'invention proposée, environ 55 secondes sont consacrées à la constitution de la zone d'image, en comparaison avec les 200 secondes qui sont nécessaires pour produire la même zone d'image sur la base de la technologie STRIPMAP traditionnelle. Le temps libéré par l'utilisation de la technique de SAR en balayage pour la production de l'image d'une bande de la zone d'intérêt, permet de réaliser d'autres modes radar durant le temps restant avant la prise d'image de la bande suivante.

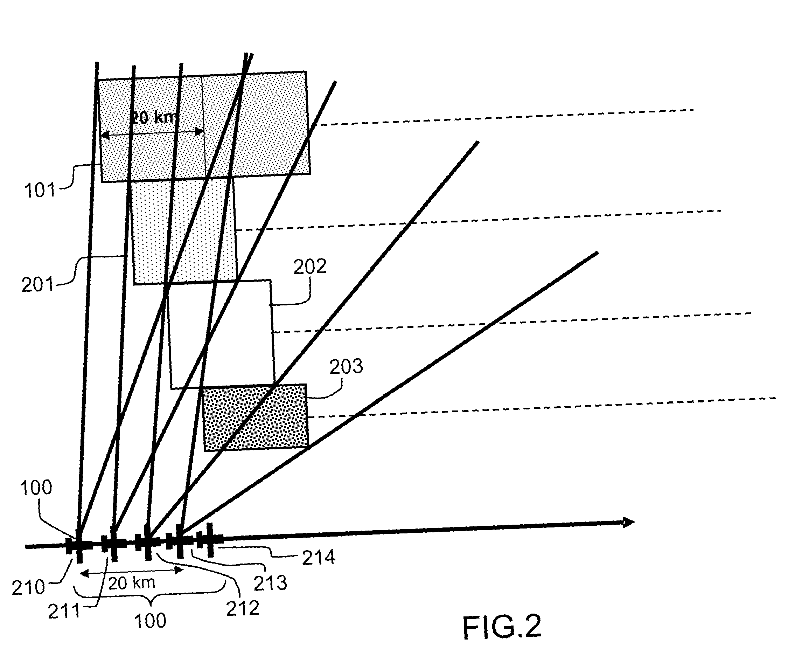

La figure 2 présente la vue schématique d'une plateforme aéroportée effectuant une imagerie de type STRIPMAP sur une bande étendue de la zone d'intérêt, selon un exemple de mode de réalisation de la présente invention.

Selon cet exemple de mode de réalisation de la présente invention, la plateforme aéroportée 100 suit une trajectoire rectiligne à une vitesse constante, et occupe des positions successives 210, 211, 212, 213, 214. A ces différentes positions, le radar effectue la prise d'images d'une pluralité de bandes 101, 201, 202, 203.

En utilisant le temps d'avance de la plateforme aéroportée 100, et en employant une technique de type SAR à balayage, le radar est capable de produire des images de plusieurs bandes 101, 201, 202, 203, durant un temps d'avancement donné. Pendant ce même temps d'avancement, le même radar employant une technique de type STRIPMAP classique, effectuerait seulement la prise de l'image de la bande 101.

Par exemple, lorsque la plateforme aéroportée 100 occupe la première position 210 et avant d'atteindre la deuxième position 211, le radar effectue la prise de l'image de la première bande 101. Ensuite, lorsque la plate-forme aéroportée 100 atteint la deuxième position 211, le radar effectue la prise de l'image de la seconde bande 201, dans cet exemple, juxtaposée à la première bande 101 et plus proche de la plate-forme aéroportée 100, avant d'atteindre la troisième position 212, où il effectue la prise de l'image de la troisième bande 202, etc.

La juxtaposition des différentes images permet de reconstituer sur l'exemple de la figure 2, où chaque bande 101, 201, 202, 203 est un carré de 20 kilomètres de côté, une image de type STRIPMAP à fauchée étendue d'environ 70 km située dans une zone de 50 à 120 km de la plateforme aéroportée 100.

Après que la plateforme aéroportée 100 a parcouru une distance de 20 kilomètres depuis la première position 210, c'est-à-dire lorsqu'elle atteint la quatrième position 214, le radar entreprend la prise de l'image d'une bande juxtaposée à la bande 101, et continue ainsi sa mission de surveillance grande zone.

Un avantage procuré par l'invention est que le dispositif de radar peut commencer les traitements visant à produire l'image de la première bande 101, tout en effectuant la prise de l'image de la deuxième bande 202, et ainsi de suite. En d'autres termes, d'une manière générale, les opérations de traitement de l'image d'une bande peuvent être produites successivement à la prise de l'image de cette bande et de manière concomitante avec la réalisation de modes radar additionnels. Les modes radar additionnels, dans l'exemple illustré par la figure 2, sont d'autres modes de prise d'images de type STRIPMAP employant la technique de SAR à balayage. Les figures suivantes illustrent d'autres exemples de modes radar additionnels.

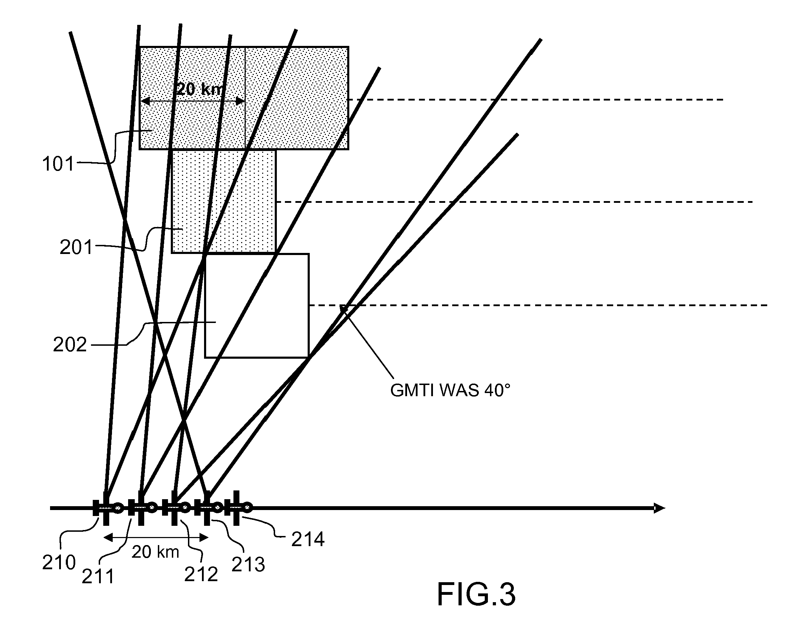

La figure 3 présente la vue schématique d'une plateforme aéroportée effectuant une imagerie de type STRIPMAP sur une bande étendue de la zone d'intérêt, combinée avec un mode radar GMTI sur la même zone, selon un exemple de mode de réalisation de l'invention.

Dans cet exemple de mode de réalisation de l'invention, le radar est capable de fournir une image de type STRIPMAP à fauchée étendue, d'une manière similaire au mode de réalisation illustré par la figure 2, sur une bande de 60 km de terrain, et d'y superposer la détection de véhicules terrestres en employant un mode de type GMTI à surveillance de grande zone, ou WAS GMTI.

Dans l'exemple illustré par la figure 3, lorsque la plateforme aéroportée 100 occupe la première position 210 et avant d'atteindre la deuxième position 211, le radar effectue la prise de l'image de la première bande 101. Ensuite, lorsque la plate-forme aéroportée 100 atteint la deuxième position 211, le radar effectue la prise de l'image de la seconde bande 201, dans cet exemple, juxtaposée à la première bande 101 et plus proche de la plate-forme aéroportée 100, avant d'atteindre la troisième position 212, où il effectue la prise de l'image de la troisième bande 202.

Lorsque la plateforme aéroportée 100 atteint la troisième position 213, le radar applique un mode de fonctionnement de type WAS GMTI pour effectuer une surveillance de mobiles terrestres sur toute la zone couverte par les trois bandes 101, 201 et 202.

Après que la plateforme aéroportée 100 a parcouru une distance de 20 kilomètres depuis la première position 210, c'est-à-dire lorsqu'elle atteint la quatrième position 214, le radar entreprend la prise de l'image d'une bande juxtaposée à la bande 101, et continue ainsi sa mission de surveillance d'une manière similaire, ou bien en employant des modes radars additionnels différents.

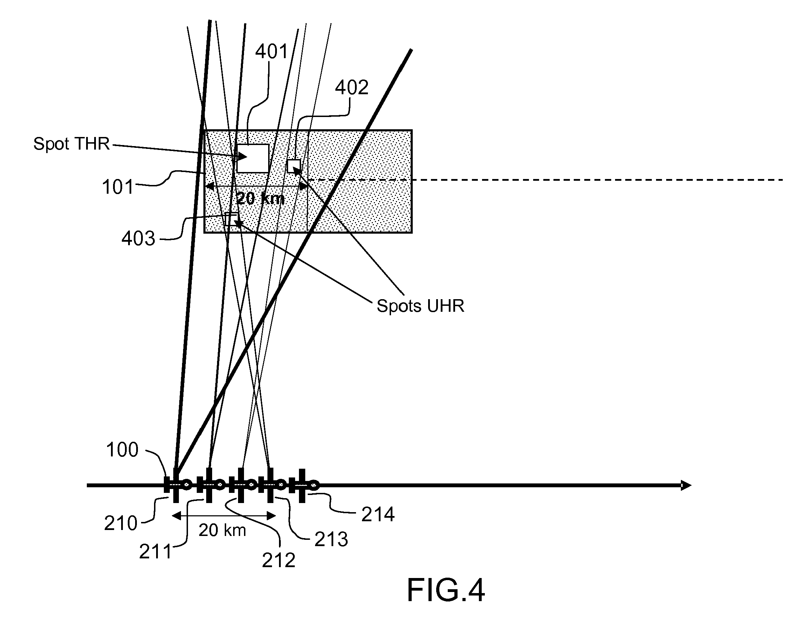

La figure 4 présente la vue schématique d'une plateforme aéroportée effectuant une imagerie de type STRIPMAP sur une bande de la zone d'intérêt, combinée avec la génération d'images de haute ou très haute définition au sein de la bande, selon un exemple de mode de réalisation de l'invention.

Dans cet exemple de mode de réalisation de l'invention, le radar est capable de fournir une imagerie de type STRIPMAP d'une bande de 20 km de terrain et de générer des images SPOT de haute ou très haute résolution sur des zones d'intérêt situées au sein de cette bande.

Dans l'exemple illustré par la figure 4, lorsque la plateforme aéroportée 100 occupe la première position 210 et avant d'atteindre la deuxième position 211, le radar effectue la prise de l'image de la première bande 101. Ensuite, lorsque la plateforme aéroportée 100 atteint la deuxième position 211, le radar peut par exemple effectuer la prise d'une image de très haute résolution en employant un mode de type SPOT THR, d'une première zone d'intérêt 401 appartenant à la première bande 401. Lorsque la plateforme aéroportée 100 atteint ensuite la troisième position 212, le radar peut par exemple effectuer la prise d'une image d'ultra-haute résolution en employant un mode de type SPOT UHR, d'une seconde zone d'intérêt 402. Lorsque la plateforme aéroportée 100 atteint la quatrième position 213, le radar peut par exemple effectuer à nouveau une prise d'image de type SPOT UHR pour une troisième zone d'intérêt 403.

Après que la plateforme aéroportée 100 a parcouru une distance de 20 kilomètres depuis la première position 210, c'est-à-dire lorsqu'elle atteint la quatrième position 214, le radar entreprend la prise de l'image d'une bande juxtaposée à la bande 101, et continue ainsi sa mission de surveillance d'une manière similaire, ou bien en employant des modes radars additionnels différents.

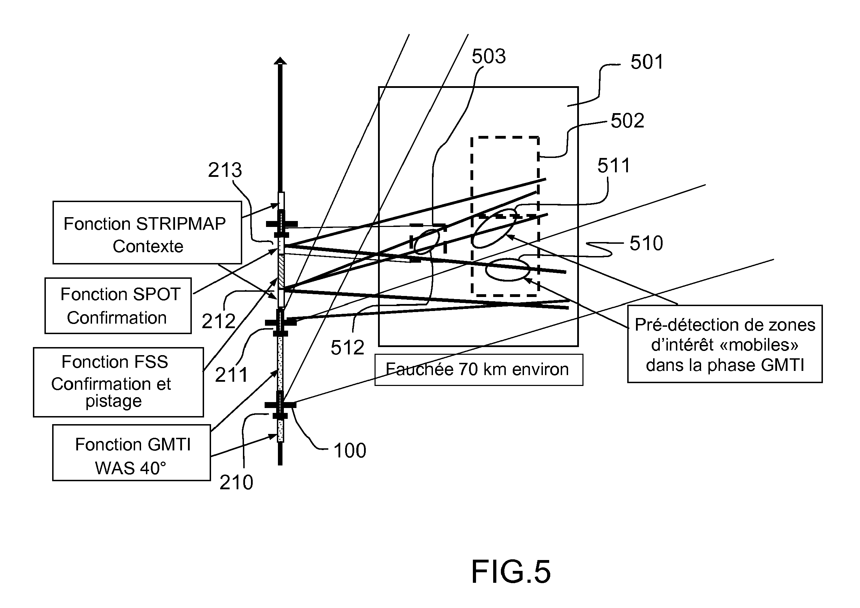

La figure 5 présente la vue schématique d'une plateforme aéroportée effectuant une imagerie de type STRIPMAP sur une bande de la zone d'intérêt, combinée avec une pluralité de modes radar, selon un exemple de mode de réalisation de l'invention.

Dans l'exemple de mode de réalisation de l'invention illustré par la figure 5, il est possible au radar de détecter des mobiles terrestres en employant une technique de type WAS GMTI, de produire l'image d'une bande de 20 kilomètres de profondeur en employant un mode de type STRIPMAP, de pister les cibles mobiles d'intérêt grâce à un mode de type balayage rapide de secteur, ou "FSS" GMTI, et de se concentrer sur une zone d'intérêt particulière pour en effectuer une prise d'image d'ultra-haute définition en employant une technique de type SPOT UHR.

Lorsque la plateforme aéroportée 100 occupe la première position 210, le radar peut effectuer une pré-détection de mobiles terrestres en employant une technique de type WAS GMTI, sur une première zone 501 de surface relativement large, par exemple avec une fauchée de 70 kilomètres. Lorsque la plateforme aéroportée 100 atteint la deuxième position 211, le radar peut alors effectuer une prise d'image de type STRIPMAP, en employant une technique de type SAR à balayage, d'une zone 502 au sein de laquelle des activités suspectes de mobiles terrestres 510,et 511 ont été détectées. Cette prise d'image permet à l'opérateur de superposer le contexte terrain, comprenant les routes, les infrastructures, etc., avec les cibles mobiles détectées. Lorsque la plateforme aéroportée 100 atteint la troisième position 212, et jusqu'à atteindre la quatrième position 213, le radar peut par exemple employer une fonction de type FSS GMTI, afin de pister et/ou identifier les mobiles terrestres d'intérêt. Pendant ce laps de temps, grâce à son mode de poursuite des cibles mobiles (FSS GMTI), le radar peut pister/détecter une cible 503 qui a stoppé son mouvement et présente donc un intérêt opérationnel particulier. Lorsque la plateforme aéroportée 100 atteint la quatrième position 213, le radar peut alors entreprendre la réalisation d'une image de très haute résolution ou d'ultra-haute résolution de la cible d'intérêt 503 qui est devenue une cible fixe, à des fins de confirmation, en employant une technique de type SPOT THR ou UHR.

Lorsque la plateforme aéroportée atteint une position d'où elle peut reprendre ce schéma de fonctionnement, les étapes citées précédemment peuvent recommencer, ou bien d'autres modes radars peuvent être entrepris.

Il est à remarquer que les modes de réalisation de la présente invention présentés ci-dessus en référence aux figures, ne sont que des exemples de schémas de combinaisons possibles de modes radar. Bien entendu, tous les types de schémas comprenant tous les types de modes radar connus peuvent être envisagés, par exemple des modes de surveillance maritime, ou de surveillance de l'espace aérien environnant, ou encore des modes de surveillance météorologique, etc... Les seules limites sont liées aux capacités matérielles du dispositif de radar embarqué dans la plateforme aéroportée 100, à l'imagination de l'opérateur et à la faisabilité temporelle du schéma.

**Revendications**

1. Dispositif radar aéroporté de surveillance au sol, **caractérisé en ce qu'**il reproduit une cartographie de type STRIPMAP d'une zone d'intérêt divisée en bandes (101), les images de ces bandes (102) étant prises successivement, chacune selon une technique de type SAR à balayage, les opérations de traitement de l'image d'une bande (101) étant produites consécutivement à la prise de l'image de cette bande (101) et de manière concomitante avec la réalisation d'au moins un mode radar additionnel, avant la prise de l'image de la bande (101) suivante.

2. Dispositif radar aéroporté selon la revendication 1, **caractérisé en ce qu'**un mode additionnel est un mode de surveillance de mobiles terrestres de type WAS GMTI.

3. Dispositif radar aéroporté selon l'une quelconque des revendications précédentes, **caractérisé en ce qu'**un mode additionnel est un mode d'imagerie de très haute résolution ou d'ultra-haute résolution de type SPOT HR ou SPOT UHR.

4. Dispositif radar aéroporté selon l'une quelconque des revendications précédentes, **caractérisé en ce qu'**un mode additionnel est un mode d'imagerie de type STRIPMAP.

5. Dispositif radar aéroporté selon l'une quelconque des revendications précédentes, **caractérisé en ce qu'**un mode additionnel est un mode de pistage de type FSS.

6. Dispositif radar aéroporté selon l'une quelconque des revendications précédentes, **caractérisé en ce qu'**un mode additionnel est un mode radar de type Détection et/ou poursuite de cibles aériennes.

7. Dispositif radar aéroporté selon l'une quelconque des revendications précédentes, **caractérisé en ce qu'**un mode additionnel est un mode radar de type Détection et/ou poursuite de cibles marines.

FIG.1

EP 2 239 597 A1

FIG.2

20 km

101

201

202

GMTI WAS 40°

210  211  20 km  212  213  214

FIG.3

FIG.4

503
501
502
511

213

Fonction STRIPMAP
Contexte

Fonction SPOT
Confirmation

212

211

510

Fonction FSS
Confirmation et
pistage

Fonction GMTI
WAS 40°

512

100

210

Pré-détection de zones
d'intérêt «mobiles»
dans la phase GMTI

Fauchée 70 km environ

FIG.5

EP 2 239 597 A1

**Europäisches Patentamt**
**European Patent Office**
**Office européen des brevets**

## RAPPORT DE RECHERCHE EUROPEENNE

Numéro de la demande

EP 10 15 9225

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2008/129584 A1 (ANTONIK PAUL [US] ET AL) 5 juin 2008 (2008-06-05) | 1,3,4,6,7 | INV.<br>G01S13/87<br>G01S13/90 |
| Y | * alinéa [0007] - alinéa [0029] *<br>* revendication 44 * | 2,5 | |
| Y | HOOGEBOOM P ET AL: "SOSTAR, A EUROPEAN SYSTEM FOR AIRBORNE GROUND SURVEILLANCE" INTERNET CITATION 24 septembre 2001 (2001-09-24), XP002303903 Extrait de l'Internet: URL:http://www.tno.nl/instit/fel/os/resources/SOSTAR_fullpaper.PDF [extrait le 2004-11-04] | 2,5 | |
| A | * page 3, colonne 2; figure 4 * | 1,3,4,6,7 | |
| A | US 5 812 082 A (MOREIRA ALBERTO [DE] ET AL) 22 septembre 1998 (1998-09-22) * colonne 1, ligne 61 - colonne 2, ligne 6; figure 1 * | 1-7 | |
| A | CURRIE, A.; BROWN, M.A.: "Wide-swath SAR" RADAR AND SIGNAL PROCESSING, IEE PROCEEDINGS F, vol. 139, no. 2, 1 avril 1992 (1992-04-01), pages 122-135, XP002567604 ISSN: 0956-375X * le document en entier * | 1 | DOMAINES TECHNIQUES RECHERCHES (IPC)<br><br>G01S |

Le présent rapport a été établi pour toutes les revendications

| Lieu de la recherche | Date d'achèvement de la recherche | Examinateur |
|---|---|---|
| La Haye | 18 juin 2010 | Van den Bosch, I |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 10 15 9225

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-06-2010

| Document brevet cité au rapport de recherche | | Date de publication | Membre(s) de la famille de brevet(s) | | Date de publication |
|---|---|---|---|---|---|
| US 2008129584 | A1 | 05-06-2008 | AUCUN | | |
| US 5812082 | A | 22-09-1998 | CA | 2199772 A1 | 13-09-1997 |
| | | | DE | 19609728 A1 | 18-09-1997 |
| | | | EP | 0795762 A2 | 17-09-1997 |

EPO FORM P0460

Pour tout renseignement concernant cette annexe : voir Journal Officiel de l'Office européen des brevets, No.12/82